(19) Europäisches Patentamt / European Patent Office / Office européen des brevets

(11) **EP 2 283 548 B1**

(12) **FASCICULE DE BREVET EUROPEEN**

(45) Date de publication et mention
de la délivrance du brevet:
**01.05.2013 Bulletin 2013/18**

(21) Numéro de dépôt: **09749789.5**

(22) Date de dépôt: **18.05.2009**

(51) Int Cl.:
*G01S 3/781* (2006.01)     *H01S 3/067* (2006.01)
*H01S 3/23* (2006.01)

(86) Numéro de dépôt international:
**PCT/EP2009/055976**

(87) Numéro de publication internationale:
**WO 2009/141299 (26.11.2009 Gazette 2009/48)**

(54) **DISPOSITIF D'IMAGERIE ACTIVE INTÉGRANT UNE SOURCE D'IMAGERIE À 1,5 MICROMÈTRE**

AKTIVE BILDGEBUNGSVORRICHTUNG MIT EINER 1.5-MIKROMETER-BILDGEBUNGSQUELLE

ACTIVE IMAGING DEVICE INCORPORATING AN IMAGING SOURCE AT 1.5 MICROMETRE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **20.05.2008 FR 0802734**

(43) Date de publication de la demande:
**16.02.2011 Bulletin 2011/07**

(73) Titulaire: **THALES**
**92200 Neuilly-sur-Seine (FR)**

(72) Inventeurs:
• **DOITTAU, François-Xavier**
**F-78910 Behoust/orgerus (FR)**
• **LALLIER, Eric**
**F-75013 Paris (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 980 123**    **EP-A1- 0 992 759**
**WO-A2-03/098263**   **US-A- 5 694 408**
**US-A- 5 729 568**    **US-A1- 2005 111 496**
**US-A1- 2007 098 028**  **US-A1- 2008 016 965**

**Description**

Le domaine de l'invention est celui des systèmes d'imagerie permettant de repérer des cibles dans un environnement donné, la cible pouvant être aérienne ou terrestre et notamment d'imagerie active permettant d'asservir un système de pointage laser à partir dudit système d'imagerie.

De manière générale, l'imagerie active utilise sa propre source de lumière, classiquement un laser à impulsion. Grâce à la directivité de l'émission et les énergies mises en jeu on recueille un signal à grande distance même au travers d'un milieu diffusant. Ces caractéristiques ont en particulier conféré à cette technique un poids important pour la sécurité et la défense. Les photons émis par un laser et réfléchis par différents objets d'une scène sont collectés par un récepteur-imageur. L'utilisation conjointe d'un laser impulsionnel et d'une porte temporelle en réception permet la sélection d'une tranche d'espace contenant les cibles d'intérêts.

Est concerné notamment le domaine de pointage des armes à énergie dirigée optique requérant la correction des effets liés aux turbulences atmosphériques sur la propagation libre de faisceaux laser. Cette correction implique d'avoir accès à une mesure de la position de la cible avec une haute résolution spatiale angulaire de l'ordre du microradian avec une bande passante de l'ordre de 500hz, assurant le premier niveau de la compensation de la déformation de la surface d'onde. Par ailleurs, le système d'illumination doit opérer à une longueur d'onde proche de celle de l'arme.

Par exemple, une imagerie active fonctionnant à 1,5 $\mu$m pour des raisons de sécurité oculaire peut être composée d'un laser d'éclairage fournissant une énergie de l'ordre de 250 milliJoules par impulsion dont la durée est de l'ordre de 500 nanosecondes et d'un imageur (caméra) ayant une fenêtre temporelle d'ouverture de l'ordre de la microseconde (afin de réduire les effets liés à la rétro-diffusion solaire) avec une largeur spectrale de filtrage d'une dizaine de nanomètres. Cette architecture représente une structure adaptée pour satisfaire aux critères de portée et de dimension des objets à traiter.

Dans ce contexte, la problématique est donc la disponibilité d'une telle source d'éclairage émettant sur un domaine spectral au voisinage de 1,5 $\mu$m sur une fenêtre spectrale de longueur d'onde $\Delta\lambda = \pm 2$ nm (qui plus est à sécurité oculaire) et délivrant une énergie par impulsion de 250 mJ à la cadence de 1 kHz. Cette source doit par ailleurs être couplée à un dispositif optique (zoom) qui ajuste le champ éclairé à la cible et à la distance d'éclairage, le champ d'observation pouvant varier de 1.5mrad à 5mrad.

Actuellement, il n'existe pas de solution démontrée répondant à l'ensemble des spécifications recherchées. Les sources d'illumination de forte énergie sont développées pour des applications longues distances aéroportées qui nécessitent un mode de fonctionnement à faible fréquence de répétition (la cadence vidéo est suffisante).

La solution la plus courante consiste à convertir en fréquence un laser solide (verre ou cristal dopé avec l'ion Néodyme Nd$^{3+}$) opérant en mode impulsionnel au voisinage de 1 $\mu$m. La conversion de fréquence vers 1.5 $\mu$m est réalisée par l'intermédiaire d'une interaction non linéaire via un Oscillateur Paramétrique Optique (OPO) constitué d'un cristal non-linéaire, par exemple KTiPO$_4$ (KTP) ou KTiAsO$_4$ (KTA) inséré dans une cavité résonnante à 1.5 $\mu$m. Il existe quelques publications rapportant des sources de ce type avec un énergie supérieure à 100 mJ mais à des cadences de répétition limitées inférieures à 30 Hz comme décrit dans les articles suivants : « Efficient, high-energy, KTP OPO pumped with 1 $\mu$m Nd-lasers » G.A. Rines et al, OSA Proceeding on Advanced Solid State Lasers (1994).. « 150mJ 1550nm KTA OPO with good beam quality and high efficiency » D.J. Armstrong et al, SPIE vol5337, Conférence : nonlinear frequency génération and conversion materials (2004). « Novel, efficient, high brightness KTP OPO-OPA in single beamline » J.C. McCarthy et al, OSA Proceeding on Advanced Solid State Lasers (2001).

Un fonctionnement à des cadences beaucoup plus élevées de l'ordre du kiloHertz et avec un niveau d'énergie conséquent à la longueur d'onde signal n'a jamais été rapporté et devrait être très problématique compte tenu de l'absorption résiduelle des cristaux non-linéaires usuels et surtout de leur faibles propriétés thermo-mécaniques.

Une autre filière technologique consiste à utiliser un milieu solide dopé avec l'ion Erbium (Er$^{3+}$) qui présente la particularité de pouvoir émettre directement un rayonnement laser vers 1,5 $\mu$m. Malheureusement, la section efficace d'émission stimulée de l'erbium est faible et conduit à une intensité de saturation très élevée (10-30 J/cm$^2$), ce qui pose quelques problèmes compte tenu du seuil de dommage optique des composants qui constituent la cavité laser. Il en résulte une extraction de l'énergie limitée (< 10%) qui ne favorise pas un fonctionnement à forte puissance moyenne. D'autre part, les réalisations dépassant 100 mJ par impulsion publiées à ce jour ne concerne que les verres dopés à l'erbium pour lesquels la cadence de répétition est très faible inférieure à 1 Hz du fait de leur très mauvaises propriétés thermo-opto-mécaniques comme décrit dans l'article « 50 mJ/30 ns FTIR Qswitched diode-pumped ErYb:Glass 1.54$\mu$m laser » E. Georgiou et al, Opt Com 198 (2001) 147-153.

La géométrie conventionnelle du milieu actif (sous la forme de barreau, plaque ...) pompé par voie optique transversalement n'est généralement pas favorable à un bon échange thermique. Inversement, un milieu amplificateur se présentant sous la forme d'une fibre de faible diamètre et de grande longueur procure une surface équivalente d'échange thermique bien meilleure. Cette gestion thermique améliorée alliée au meilleur rendement caractéristique des amplificateurs et lasers à fibres avantagent cette approche technologique pour la génération de fortes puissances moyennes vers 1.5 $\mu$m. En particulier, un laser à fibre co-dopé ytterbium-erbium émettant environ 300 W à 1.5 $\mu$m de

façon continue a déjà été démontré et décrit dans l'article : "Erbium:Ytterbium Codoped Large-Core Fiber Laser with 297 W Continuous-Wave Output Power", Y. Jeong et al, IEEE J. of Selected Topics in Quantum Electronics, Vol. 13, N°3, 573-579, 2007.

Une source laser à fibres montées en parallèle est décrite dans le document US 5694408.

La limitation principale de l'architecture à fibre est son faible volume actif qui limite l'énergie extractible. Celle-ci est liée à l'énergie de saturation et au gain en petits signaux $G_0$ de la façon suivante :

$$E_{extr} = E_{sat}Ln(G_0) \qquad \text{où}, \ E_{sat} = \frac{h\nu_s A}{(\sigma_{es} + \sigma_{as})}$$

Avec : $E_{extr}$ : l'énergie extractible et $E_{sat}$ : l'énergie de saturation

$h\nu_s$ : l'énergie des photons signaux,

$\sigma_{es}$ et $\sigma_{as}$ : respectivement les sections efficaces d'émission et d'absorption à la longueur d'onde signal,

A : la surface effective d'interaction (correspondant au coeur dopé).

En pratique, l'énergie maximale pouvant être extraite dans une fibre amplificatrice est de l'ordre de 10 fois l'énergie de saturation, soit pour un gain non saturé de l'ordre de 40 dB. Au delà, l'amplification de l'émission spontanée est telle qu'elle sature la transition et tout pompage supplémentaire amplifie ce bruit.

Il suffit en principe d'augmenter le diamètre de la fibre pour extraire plus d'énergie. Cela étant, si l'on cherche à garantir une qualité de faisceau de l'ordre de 20 mm x mrad (soit un coefficient M tel que $M^2 = 10$), on est limité à un diamètre de coeur dopé de 100 $\mu$m pour une ouverture numérique réaliste de 0.1.

Dans ces conditions, l'énergie extractible est limité à une dizaine de milliJoules en raison du facteur $\sigma_{es} + \sigma_{as}$ = 7 $10^{-21}$ cm$^2$, à $\lambda$ = 1.56 $\mu$m,

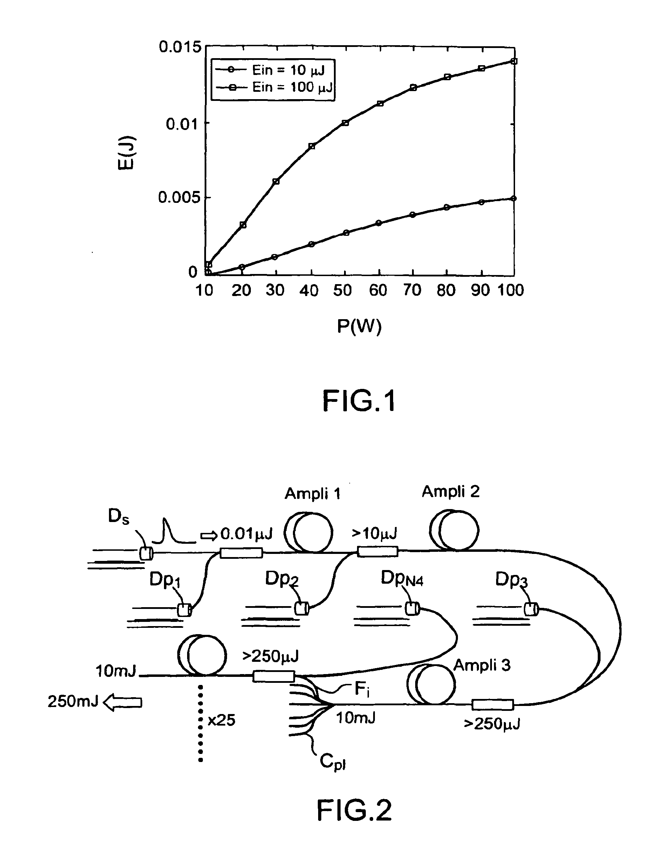

La figure 1 illustre un exemple de simulation numérique de l'énergie pouvant être extraite d'une telle fibre en fonction de la puissance de pompage à 940nm et selon le niveau d'énergie injecté dans l'amplificateur.

Dans ce contexte, la présente invention a pour objet un dispositif d'imagerie active utilisant une source d'imagerie émettant à 1,5 micron et capable de délivrer un faisceau optique d'énergie suffisante et d'impulsions suffisamment brèves pour réaliser de l'imagerie active et notamment pour le suivi de cible à détruire.

Plus précisément la présente invention a pour objet un dispositif d'imagerie active utilisant une source d'imagerie laser à impulsions émettant à une longueur d'onde de l'ordre de 1,5 micron sur une bande spectrale $\Delta\lambda$ de quelques nanomètres et délivrant une puissance comprise entre au moins quelques dizaines de millijoules et plusieurs centaines de millijoules L'invention est définie dans la revendication 1.

Selon une variante de l'invention, la source d'imagerie comporte un coupleur permettant de distribuer l'énergie de l'onde amplifiée sur l'entrée des N fibres.

Selon une variante de l'invention, la source d'imagerie comprend en outre un système optique permettant d'assurer un champ d'observation pouvant varier de 1 milliradian à plusieurs milliradians.

Selon une variante de l'invention, le système optique comporte un ensemble de N optiques couplées en sortie des N fibres.

Selon une variante de l'invention, le système optique comporte un ensemble de N fibres recombinées en M fibres de sortie par un ensemble de coupleurs.

Selon une variante de l'invention, lesdites optiques comprennent un couple de lentilles et des moyens permettant de régler la distance entre lentilles de manière à pouvoir faire varier le champ d'observation.

Selon une variante de l'invention, lesdites optiques comprennent un couple de prismes et des moyens de mise en rotation desdits prismes de manière à faire varier la position angulaire d'un prisme à l'autre et par la même le champ d'observation.

Selon une variante de l'invention, la chaîne d'amplificateurs comporte trois amplificateurs à fibres alimentés par des diodes de pompage.

Selon une variante de l'invention, les fibres sont des fibres dopées erbium ou des fibres dopées erbium et codopées ytterbium.

Selon une variante de l'invention, la source d'imagerie comporte 25 fibres montées en parallèle de manière à générer un faisceau optique d'énergie de l'ordre de 250 millijoules.

Le dispositif d'imagerie comporte un imageur ayant une fenêtre temporelle d'ouverture de l'ordre de la microseconde associé à un filtre spectral de l'ordre de 10 nm de largeur.

Un tel dispositif d'imagerie est particulièrement bien adapté à de l'imagerie permettant de s'affranchir de phénomènes de rétrodiffusion du soleil lors de l'analyse d'éléments aériens ainsi qu'aux risques d'éblouissement par les parties de la cible chauffées à haute température par l'arme laser.

L'invention sera mieux comprise et d'autres avantages apparaîtront à la lecture de la description qui va suivre donnée à titre non limitatif et grâce aux figures annexées parmi lesquelles :

- la figure 1 illustre un exemple de simulation numérique de l'énergie pouvant être extraite d'une source optique fibrée selon l'art connu en fonction de la puissance de pompage à 940 nm et selon le niveau d'énergie injecté dans la fibre ;
- la figure 2 illustre un exemple de source d'imagerie selon l'invention comportant la mise en parallèle de 25 fibres ;
- la figure 3 illustre un arrangement matriciel mettant en évidence le faisceau optique résultant constitutif de la source d'imagerie à 1,5 $\mu$m. Les cercles Chi désignent les champs d'observation liés à chacun des faisceaux lasers ;
- la figure 4 illustre une variante de l'invention dans laquelle une partie des fibres amplificatrices de sortie sont recombinées ;
- la figure 5 illustre un exemple de source d'imagerie selon l'invention comportant en outre des moyens de type disaporamètrre utilisé pour élargir le champ d'imagerie.

De manière générale, la source d'imagerie selon l'invention comporte au moins une source émettant une onde capable de présenter des impulsions. Typiquement il peut s'agir d'une diode laser qui alimente une chaîne d'amplification, qui elle-même alimente l'ensemble des fibres montées en parallèle de manière à pouvoir générer la source d'imagerie.

Un exemple de la solution proposée dans l'invention est illustrée en figure 2 et est fondée sur la capacité des amplificateurs lasers notamment ceux à fibres dopées erbium à fournir des impulsions de quelques centaines de nanosecondes de large, à une fréquence de répétition de l'ordre de 1 kHz avec un niveau d'énergie de 10 mJ par impulsion, avec un paramètre de qualité de faisceau M$^2$ de l'ordre de 10 et sur une bande spectrale $\Delta\lambda$ de quelque nm. La flexibilité du milieu amplificateur à fibre se prête à la mise en parallèle de plusieurs dizaines d'amplificateurs afin de disposer du niveau d'énergie requis pour l'illumination à distance de cibles. Plus précisément, selon l'exemple illustré en figure 2, une diode signal $D_s$ délivrant une onde signal d'énergie de l'ordre de 0,01 $\mu$J alimente un premier amplificateur Ampli1. Il peut s'agir par exemple d'un amplificateur à fibre dopé erbium monomode à simple coeur. La fibre est par exemple d'un diamètre de coeur de 5 à 10 $\mu$m et supportant un seul mode à 1,5 $\mu$m. Elle est pompée par une diode de pompage $Dp_1$ à 980 nm de puissance inférieure à 1 W et couplée à une fibre monomode. Le dopage et la longueur de fibre sont choisis pour obtenir un gain de 30 dB et une énergie d'au moins 10 $\mu$J en sortie, soit une puissance moyenne de 10 mW à 1kHz.

L'onde signal amplifiée qui présente une énergie de l'ordre de 10 $\mu$J est injectée à son tour dans un second amplificateur Ampli2 pompé par une seconde pompe $Dp_2$ permettant d'obtenir une onde signal amplifiée d'énergie de l'ordre de 250 $\mu$J . Il peut s'agir par exemple d'un amplificateur à fibre dopé Yb:Er à double coeur. Le coeur signal a un diamètre d'au moins 20 $\mu$m pour permettre un énergie de sortie de 250 $\mu$J et l'ouverture numérique peut varier de 0.1 à 0.2. Le coeur de pompe est par exemple de 250 $\mu$m avec une ouverture numérique supérieure à 0.4 facilitant le couplage de la pompe. Celle-ci est par exemple une diode à 920-980 nm d'au moins 10 W couplée à une fibre de 200 $\mu$m de diamètre de coeur et de 0.22 d'ouverture numérique. La puissance moyenne de sortie est de 0.25 W pour une cadence de 1 kHz. La longueur de fibre peut varier de typiquement 2 à 10 m suivant les niveaux de dopages utilisés et la longueur d'onde de pompage.

Cette onde signal continue à être amplifiée dans la chaîne d'amplification via un troisième amplificateur Ampli3 pompé par une troisième diode de pompe $Dp_3$. Il peut s'agir par exemple d'un amplificateur à fibre dopé Yb:Er à double coeur. Le coeur signal à un diamètre d'environ 100 $\mu$m pour permettre une énergie de sortie supérieure à 10 mJ. L'ouverture numérique est de l'ordre de 0,1 pour assurer une qualité de faisceau de 20 mm.mrad correspondant à un facteur M$^2$ égal à 10. Le coeur de pompe est par exemple de 400 $\mu$m avec une ouverture numérique supérieure à 0.4 facilitant le couplage de la pompe. Celle-ci est par exemple une diode à 920-980 nm d'au moins 100 W couplée à une fibre de 400 $\mu$m de diamètre de coeur et de 0.22 d'ouverture numérique. La puissance moyenne de sortie est de 10 W pour une cadence de 1 kHz. La longueur de fibre peut varier de typiquement 2 à 10 m suivant les niveaux de dopages utilisés et la longueur d'onde de pompage.

On obtient ainsi une onde signal d'énergie de l'ordre de 10 mJ pouvant venir alimenter via un coupleur $C_{pl}$ un ensemble de fibres Fi en l'occurrence 25 dans le présent exemple. L'énergie de 10 mJ est distribuée en énergie élémentaire de 250 $\mu$J sur chacune des 25 fibres. Un ensemble de 25 amplificateurs comportant des diodes de pompage $D_{Np4}$ permet en sortie de chacune des fibres Fi de fournir une énergie de 10 mJ, soit une énergie totale de source impulsionnelle de 25 x 10 mJ, 250 mJ.

Ces 25 amplificateurs sont identiques à l'amplificateur Ampli 3. La jonction entre les amplificateurs Ampli1 et Ampli2 puis Ampli2 et Ampli3 est réalisée à l'aide de fibres de transitions "taper fibers" dont la géométrie varie afin d'adapter le diamètre de mode entre deux fibres amplificatrices. Entre ces amplificateurs, on peut insérer des composants fibrés tels que des filtres en longueur d'onde, des modulateurs acousto-optiques, ou des isolateurs optiques, afin de minimiser l'amplification du bruit entre les impulsions et d'éviter une oscillation.

D'autre part, il est aussi possible de réaliser les amplificateurs Ampli2 et Ampli3 à l'aide de fibres similaires mais uniquement dopées erbium. Dans ce cas la longueur d'onde de pompage est préférentiellement vers 978 nm et la longueur des fibres doit être augmentée car l'absorption est moins intense.

Le couplage entre l'amplificateur Ampli3 et les 25 amplificateurs est réalisé à l'aide d'un coupleur multimode 1 x25. Ce composant peut être réalisé soit à l'aide d'un arborescence de coupleurs multimodes 1 x2, soit à l'aide d'un unique composant permettant cette transition.

Ainsi selon l'invention, l'injection de ces N amplificateurs en parallèle à partir d'un signal pilote commun permet d'assurer la synchronisation et le format temporels ainsi que la valeur de la longueur d'onde d'émission.

Pour réaliser une source d'imagerie, chacun de ces lasers est associé à une optique dont le diamètre est donné par :

$$\phi_{optique} = \frac{4M^2 \times \lambda}{\pi\theta}$$

$M^2$ caractérise l'écart de la qualité du faisceau par rapport à sa valeur en limite de diffraction ($M^2$ est égal à 1); $\lambda$ est la longueur d'onde et $\theta$ est le champ d'observation.

Ainsi, pour $M^2$ = 10 à $\lambda$ = 1.5$\mu m$ et pour $\theta$ = 1.5 $mrad$ on obtient:

$$\phi_{optique} = 12{,}7mm$$

La pupille composite de 25 lasers délivrant une énergie globale de la classe 250mJ peut donc présenter une dimension de 65x65.i

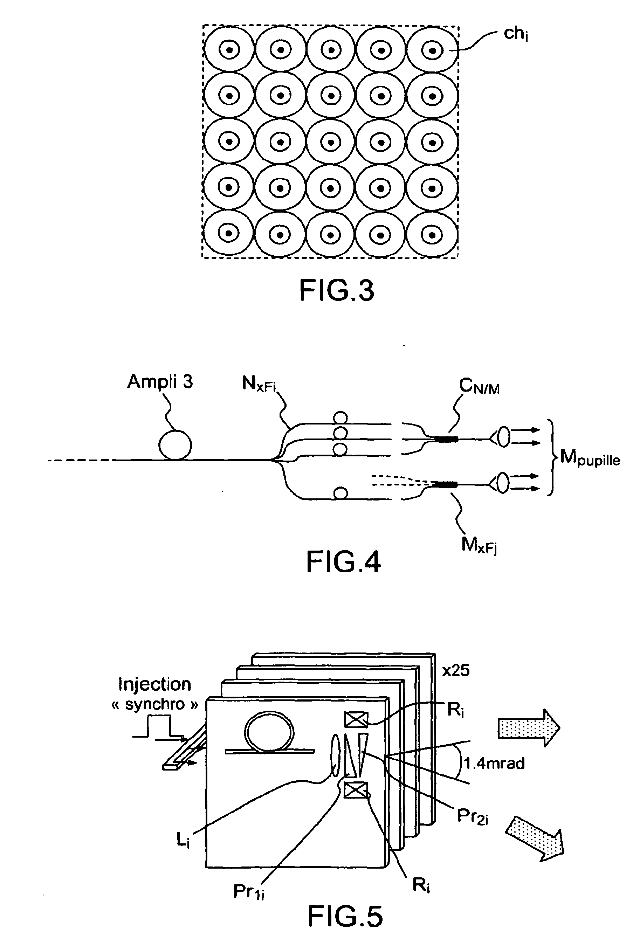

Plus précisément, chaque faisceau laser en sortie de chacune des 25 fibres est couplé à une optique de type lentille, distribué selon un arrangement matriciel comme illustré en figure 3, qui met en évidence le faisceau optique résultant constitutif de la source d'imagerie à 1,5 $\mu m$. Les cercles Chi désignent les champs d'observation liés à chacun des faisceaux lasers, en sortie de fibre, avec une divergence de 1,5 milliradians. A une distance d'un km on obtient un cercle d'observation de 1,5 mètre, les 25 cercles sont pratiquement superposés.

Selon une variante de l'invention, on peut faire varier le champ d'observation grâce à des couples de lentilles dont on fait varier la distance pour réaliser une fonction zoom et ainsi élargir le champ d'observation, permettant par exemple de générer une source d'imagerie d'étendue de l'ordre de 5 mètres de diamètre à une distance de 1 km.

Selon une autre variante de l'invention, il est possible en jouant sur les optiques associées d'ajuster l'harmonisation de ces lasers grâce à l'emploi de structures de type diasporamètre constitués de jeux de deux prismes dont les orientations en rotation peuvent être modifiées. Leur mise en oeuvre est en outre très simple compte tenu du faible diamètre et du caractère mono spectral du rayonnement. Cette configuration revient à changer la direction dans laquelle regardent les différents prismes, permettant d'étaler sensiblement à grande distance, l'étendue du champ d'observation et conduisant typiquement à une zone d'observation de largeur de 4 à 5 mètres.

Typiquement, l'ensemble de ces diasporamètres peut être utilisé pour faire varier le champ de 1,5 à 5 mrad.

Les prismes employés peuvent être de type prisme monochromatique à 1,5 $\mu m$ et être par exemple en silice.

Selon une autre variante de l'invention, une partie des N fibres amplificatrices de sortie est recombinée en un nombre plus restreint M de fibres afin de diminuer si besoin le nombre de pupilles du sytème d'imagerie. Cela peut être par exemple le cas si on souhaite travailler à des cadences plus élevées et avec une énergie plus modérée par fibre. Cela peut être aussi le cas si l'on souhaite réduire le nombre de pupilles pour simplifier le système. Dans ce cas N est un multiple de M et la combinaison peut-être réalisée à l'aide de coupleurs $C_{N/M}$ à fibres multimodes n x 1 où n = N/M. Ce type de composant est disponible commercialement et peut-être réalisé sur mesure. On utilise pour cela des fibres passives (sans ions laser) dont les caractéristiques (diamètre de coeur et ouverture numérique du signal à 1,5 $\mu m$) sont identiques à celles des fibres amplificatrices. La fibre de sortie est une fibre passive dont le diamètre et l'ouverture numérique sont choisis afin de conserver l'étendue géométrique totale des N fibres (diamètre x ouveture numérique). La figure 4 montre un exemple de la chaine d'amplification intégrant cette option. Ainsi à partir de N x Fi fibres on obtient en sortie M x Fj fibres.

Selon un premier exemple, avec un nombre N égal à 57, chaque fibre émettant 5 mJ, on peut avoir un nombre M égal à 3, soit 3 pupilles de sortie, en utilisant un coupleur 19 x 1.

Selin un second exemple, avec un nombre N égal à 56, chaque fibre émettant 5 mJ, on peut avoir un nombre M égal à 8, soit 8 pupilles de sortie, en utisant un coupleur 7 x 1.

La figure 5 schématise une vue en coupe de l'ensemble des structures de type diasporamètre pouvant être utilisées dans une variante de l'invention, couplées à chaque faisceau de sortie d'énergie 10 mJ. Des moyens de mise en rotation Ri sont couplés à deux prismes $Pr_{1i}$ et $Pr_{2i}$, en sortie d'une lentille Li.

Pour constituer un dispositif d'imagerie, la source d'imagerie est couplée à un imageur ayant une fenêtre temporelle d'ouverture de l'ordre de la microseconde et d'une fenêtre spectrale de 10 nm pour s'affranchir de l'effet sur le rapport S/B des sources de lumière parasite que constituent la diffusion solaire par l'atmosphère et la partie de la cible portée a la température de fusion par l'arme laser.

**Revendications**

1. Dispositif d'imagerie active d'une cible comprenant :

   - une source d'imagerie fonctionnant à une longueur d'onde voisine de 1,5 micromètre et capable d'émettre des photons susceptibles d'être réfléchis par différents objets d'une scène et définissant un champ d'observation ;
   - un récepteur imageur collectant les photons réfléchis par lesdits différents objets de la scène,
   - un dispositif optique ajustant le champ d'observation à ladite cible, **caractérisé en ce que** :
   - la source d'imagerie est une source laser à impulsions émettant dans une bande spectral ($\Delta\lambda$) de quelques nanomètres et délivrant une puissance comprise entre au moins quelques dizaines de millijoules et plusieurs centaines de millijoules et comportant :

     ● une source (Ds) émettant une onde présentant des impulsions de durée de l'ordre de quelques centaines de nanosecondes ;
     ● une chaîne d'amplificateurs (Ampli1, Ampli2, Ampli3) en série délivrant une onde amplifiée à partir de l'onde issue de la source impulsionnelle, ladite chaîne comprenant en sortie au moins une fibre amplificatrice de coeur d'environ 100 microns et permettant de générer à partir d'une onde signal de quelques dizaines de nanojoules une onde amplifiée dans ladite fibre amplificatrice de sortie d'énergie supérieure à au moins une dizaine de millijoules;
     ● un ensemble de N fibres (Fi) montées en parallèle, alimenté par l'onde amplifiée, chacune des fibres montées en parallèle étant couplée à un amplificateur de sortie.

2. Dispositif d'imagerie active selon la revendication 1, **caractérisé en ce que** la source d'imagerie comporte un coupleur permettant de distribuer l'énergie de l'onde amplifiée sur l'entrée des N fibres.

3. Dispositif d'imagerie active selon la revendication 1, **caractérisé en ce que** la source d'imagerie comprend en outre un système optique permettant d'assurer un champ d'observation pouvant varier de 1 milliradian à plusieurs milliradians.

4. Dispositif d'imagerie active selon la revendication 1, **caractérisé en ce que** la source d'imagerie comporte un ensemble de N optiques couplées en sortie des N fibres.

5. Dispositif d'imagerie active selon la revendication 1, **caractérisé en ce que** la source d'imagerie comporte un ensemble de N fibres (Fi) recombinées en M fibres de sortie (Fj) par un ensemble de coupleurs ($C_{N/M}$).

6. Dispositif d'imagerie active selon la revendication 4, **caractérisé en ce que** lesdites optiques comprennent un couple de lentilles et des moyens permettant de régler la distance entre lentilles de manière à pouvoir faire varier le champ.

7. Dispositif d'imagerie active selon la revendication 4, **caractérisé en ce que** lesdites optiques comprennent un couple de prismes et des moyens de mise en rotation desdits prismes de manière à faire varier la position angulaire d'un prisme à l'autre.

8. Dispositif d'imagerie active selon l'une des revendications précédentes, **caractérisé en ce que** la chaîne d'amplificateurs comporte trois amplificateurs à fibres alimentés par des diodes de pompage.

9. Dispositif d'imagerie active selon l'une des revendications précédentes, **caractérisé en ce que** les fibres sont des fibres dopées erbium ou des fibres dopées erbium et codopées ytterbium.

10. Dispositif d'imagerie active selon l'une des revendications précédentes, **caractérisé en ce que** la source d'imagerie comporte 25 fibres montées en parallèle de manière à générer un faisceau optique d'énergie de l'ordre de 250 millijoules.

11. Dispositif d'imagerie active selon l'une des revendications précédentes, **caractérisé en ce que** l'imageur a une fenêtre temporelle d'ouverture de l'ordre de la microseconde.

**Claims**

1. An active imaging device for a target comprising:

   - an imaging source operating at a wavelength in the region of 1.5 micrometres and being designed to emit photons that tend to be reflected by various objects in a scene and defining a field of observation;
   - an imaging receiver collecting the photons reflected by said various objects of the scene;
   - an optical device adjusting the field of observation to said target, **characterised in that**:
   - the imaging source is a pulsed laser source emitting in a spectral band ($\Delta\lambda$) of a few nanometres and delivering power that is between at least a few tens of millijoules and several hundred millijoules and comprising:

     ● a source (Ds) emitting a wave having pulses with a duration in the order of a few hundred nanoseconds;
     ● a chain of amplifiers (Ampli1, Ampli2, Ampli3) in series, delivering an amplified wave from the wave coming from the pulse source, said chain comprising at the output at least one amplifying fibre with a core of approximately 100 microns and allowing the generation, from a signal wave of a few tens of nanojoules, of an amplified wave in said amplifying fibre with an energy output that is greater than at least ten or so millijoules;
     ● a set of N fibres (Fi) mounted in parallel, fed by the amplified wave, each of the fibres mounted in parallel being coupled with an output amplifier.

2. The active imaging device according to claim 1, **characterised in that** the imaging source comprises a coupler that allows the distribution of the energy of the amplified wave over the input of the N fibres.

3. The active imaging device according to claim 1, **characterised in that** the imaging source further comprises an optical system that allows an observation field to be provided that can vary from one milliradian to several milliradians.

4. The active imaging device according to claim 1, **characterised in that** the imaging source comprises a set of N optics coupled at the output of the N fibres.

5. The active imaging device according to claim 1, **characterised in that** the imaging source comprises a set of N fibres (Fi) that are recombined into M output fibres (Fj) by a set of couplers ($C_{N/M}$).

6. The active imaging device according to claim 4, **characterised in that** said optics comprise a pair of lenses and means for adjusting the distance between lenses so as to be able to vary the field.

7. The active imaging device according to claim 4, **characterised in that** said optics comprise a pair of prisms and means for rotating said prisms so as to vary the angular position of one prism relative to the other.

8. The active imaging device according to any one of the preceding claims, **characterised in that** the chain of amplifiers comprises three fibre amplifiers fed by pumping diodes.

9. The active imaging device according to any one of the preceding claims, **characterised in that** the fibres are erbium doped fibres or erbium doped and ytterbium codoped fibres.

10. The active imaging device according to any one of the preceding claims, **characterised in that** the imaging source comprises 25 fibres mounted in parallel so as to generate an optical beam with energy of the order of 250 millijoules.

11. The active imaging device according to any one of the preceding claims, **characterised in that** the imager has an opening time window of the order of a microsecond.

**Patentansprüche**

1. Aktive Bildgebungsvorrichtung eines Ziels, die umfasst:

   - eine Bildgebungsquelle, die mit einer Wellenlänge von zirka 1,5 Mikrometern arbeitet und fähig ist, Photonen zu senden, die imstande sind, von verschiedenen Objekten einer Szene reflektiert zu werden, wobei ein Beobachtungsfeld definiert wird,
   - einen bildgebenden Empfänger, der die von den verschiedenen Objekten der Szene reflektierten Photonen sammelt,
   - eine optische Vorrichtung, die das Beobachtungsfeld des Ziels justiert, **dadurch gekennzeichnet, dass**.
   - die Bildgebungsquelle eine Impulslaserquelle ist, die in einem Spektralband ($\Delta\lambda$) von einigen Nanometern sendet und eine Leistung liefert, die zwischen mindestens einigen Dutzend Millijoule und mehreren Hundert Millijoule inklusive ist und aufweist:

      ● eine Quelle (Ds), die eine Welle sendet, die Impulse einer Dauer von zirka einigen Hundert Nanosekunden aufweist,
      ● eine Verstärkerkette (Ampli1, Ampli2, Ampli3) in Reihe, die ausgehend von der Welle, die von der Impulsquelle ausgeht, eine verstärkte Welle liefert, wobei die Kette am Ausgang mindestens eine verstärkende Kernfaser von zirka 100 Mikron umfasst und erlaubt, ausgehend von einer Signalwelle von einigen Dutzend Nanojoule eine verstärkte Welle in der verstärkenden Ausgangsfaser mit einer Energie von über mindestens einem Dutzend Millijoule zu generieren,
      ● eine Gruppe von N Fasern (Fi), die parallel montiert sind, die von der verstärkten Welle versorgt wird, wobei jede der parallel montierten Fasern mit einem Ausgangsverstärker gekoppelt ist.

2. Aktive Bildgebungsvorrichtung nach Anspruch 1, **dadurch gekennzeichnet, dass** die Bildgebungsquelle einen Koppler aufweist, der es erlaubt, die Energie der verstärkten Welle auf den Eingang der N Fasern zu verteilen.

3. Aktive Bildgebungsvorrichtung nach Anspruch 1, **dadurch gekennzeichnet, dass** die Bildgebungsvorrichtung ferner ein optisches System umfasst, das erlaubt, ein Beobachtungsfeld sicherzustellen, das von 1 Milliradian bis zu mehreren Milliradian schwanken kann.

4. Aktive Bildgebungsvorrichtung nach Anspruch 1, **dadurch gekennzeichnet, dass** die Bildgebungsquelle eine Gruppe von N Optiken aufweist, die am Ausgang der N Fasern gekoppelt sind.

5. Aktive Bildgebungsvorrichtung nach Anspruch 1, **dadurch gekennzeichnet, dass** die Bildgebungsquelle eine Gruppe von N Fasern (Fi) aufweist, die von einer Kopplergruppe ($C_{N/M}$) in M Ausgangsfasern (Fj) rekombiniert sind.

6. Aktive Bildgebungsvorrichtung nach Anspruch 4, **dadurch gekennzeichnet, dass** die Optiken ein Linsenpaar und Mittel umfassen, die es erlauben, den Abstand zwischen Linsen derart einzustellen, dass das Feld veränderbar ist.

7. Aktive Bildgebungsvorrichtung nach Anspruch 4, **dadurch gekennzeichnet, dass** die Optiken ein Prismenpaar und Mittel umfassen, um die Prismen derart in Rotation zu versetzen, dass die Winkelposition eines Prismas zum anderen verändert wird.

8. Aktive Bildgebungsvorrichtung nach einem der vorangehenden Ansprüche, **dadurch gekennzeichnet, dass** die Verstärkerkette drei Verstärker mit Fasern aufweist, die von Pumpdioden versorgt werden.

9. Aktive Bildgebungsvorrichtung nach einem der vorangehenden Ansprüche, **dadurch gekennzeichnet, dass** die Fasern Erbium-dotierte Fasern oder Erbium-dotierte und Ytterbium-codotierte Fasern sind.

10. Aktive Bildgebungsvorrichtung nach einem der vorangehenden Ansprüche, **dadurch gekennzeichnet, dass** die Bildgebungsquelle 25 Fasern aufweist, die derart parallel montiert sind, dass ein optisches Bündel mit einer Energie von zirka 250 Millijoule generiert wird.

11. Aktive Bildgebungsvorrichtung nach einem der vorangehenden Ansprüche, **dadurch gekennzeichnet, dass** der Bildgeber ein Öffnungszeitfenster in der Größenordnung der Mikrosekunde hat.

FIG.1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5694408 A

**Littérature non-brevet citée dans la description**

- **G.A. RINES et al.** Efficient, high-energy, KTP OPO pumped with 1 $\mu$m Nd-lasers. *OSA Proceeding on Advanced Solid State Lasers,* 1994
- **D.J. ARMSTRONG et al.** 150mJ 1550nm KTA OPO with good beam quality and high efficiency. *SPIE vol5337, Conférence : nonlinear frequency génération and conversion materials,* 2004
- **J.C. MCCARTHY et al.** Novel, efficient, high brightness KTP OPO-OPA in single beamline. *OSA Proceeding on Advanced Solid State Lasers,* 2001
- **E. GEORGIOU et al.** 50 mJ/30 ns FTIR Qswitched diode-pumped ErYb:Glass 1.54$\mu$m laser. *Opt Com,* 2001, vol. 198, 147-153
- **Y. JEONG et al.** Erbium:Ytterbium Codoped Large-Core Fiber Laser with 297 W Continuous-Wave Output Power. *IEEE J. of Selected Topics in Quantum Electronics,* 2007, vol. 13 (3), 573-579